# EUROPEAN PATENT APPLICATION

(11) **EP 4 573 985 A1**
(43) Date of publication of application: **25.06.2025**
(21) Application number: 23219191.6
(22) Date of filing: 21.12.2023
(51) Int. Cl.: A47J 31/44, A47J 31/42

(54) **KITCHEN TAMPER HEAD, KITCHEN TAMPER ASSEMBLY AND BEVERAGE MACHINE**

(71) Applicant: Versuni Holding B.V., 5656 AE Eindhoven (NL)
(72) Inventor: NOORDHUIS, Joeke, 5656 AE Eindhoven (NL); VAN TOOR, Johannes Hendrikus, 5656 AE Eindhoven (NL)
(74) Representative: Vollering, Stefanus Franciscus Maria

(57) **Abstract**

Provided is a kitchen tamper head (101) for tamping granular material, which granular material is suitable for preparing a beverage. The kitchen tamper head comprises a surface (117) for contacting the granular material during tamping. A central region (117A) of the surface is recessed relative to a peripheral region (117B) of the surface, so as to provide the granular material with a shape, e.g. a convex shape, that complements the shape of the surface. Additionally provided is a kitchen tamper assembly comprising the kitchen tamper head, together with a vessel (103) for receiving the granular material that is to be tamped and/or a pressure control system for enabling a controlled pressure to be exerted by the surface on the granular material during tamping. Still further provided is a beverage machine comprising the kitchen tamper head or the kitchen tamper assembly. Yet further provided is a method of operating the kitchen tamper head.

## Description

### FIELD OF THE INVENTION

The invention relates to a kitchen tamper head for tamping granular material, which granular material is for preparing a beverage. The kitchen tamper head may, for example, be a coffee tamper head for tamping ground coffee.

The invention further relates to a kitchen tamper assembly comprising the kitchen tamper head.

The invention yet further relates to a beverage machine, for example a coffee machine, such as an automatic or semi-automatic coffee machine, comprising the kitchen tamper head or the kitchen tamper assembly.

### BACKGROUND OF THE INVENTION

A kitchen tamper head is a device used for tamping granular material, such as ground coffee, typically prior to passing hot water through the tamped granular material to prepare a beverage.

A denser mass of granular material results from the tamping that provides more resistance to liquid flow therethrough than that provided by the granular material prior to tamping.

The term "tamping" as used herein refers to compressing, typically by downwardly pressing onto, the granular material.

Homogeneity of the tamped granular material may be a relevant requirement. If the tamped granular material is inhomogeneous, it may not be pressed dry (following passing of the liquid therethrough) and may fall apart during subsequent disposal.

The user may accordingly prefer an intact, relatively dry tamped granular material that leaves less mess during the process of disposal. The user may also prefer the visual appearance of such an intact dry tamped granular material, since this may assist to convey the impression that the brewing process and/or the beverage machine in which the kitchen tamper head is included is/are of high quality.

In order to attain such an intact dry tamped granular material, post-treatment of the tamped granular material may not be feasible. Moreover, adjustment of particle size of the granular material may not be viable because of the particle size being primarily determined by taste requirements.

### SUMMARY OF THE INVENTION

The invention is defined by the claims.

According to examples in accordance with an aspect of the invention, there is provided a kitchen tamper head for tamping granular material suitable for preparing a beverage, the kitchen tamper head comprising a surface for contacting the granular material during tamping, a central region of the surface being recessed relative to a peripheral region of the surface.

The central region being recessed relative to the peripheral region may provide the tamped granular material with a shape, e.g. convex shape, that protrudes in a central portion of the tamped granular material relative to a peripheral portion of the tamped granular material.

It has been found that providing the tamped granular material with such a shape may assist subsequent release of the tamped granular material from a vessel in which the granular material is tamped. This may facilitate disposal of the tamped granular material after it has been used to prepare a beverage.

The shape, e.g. convex shape, of the tamped granular material may also mean that it has an enhanced visual appearance, before and during disposal. This may assist the kitchen tamper head, or a kitchen tamper assembly or beverage machine in which the kitchen tamper head is included, to be favorably perceived by the user as being of good quality.

The surface may curve between the peripheral region and the central region. This may give the surface of the tamped granular material a convex shape, for example a domed shape. As well as enhancing the visual appearance of the tamped granular material, conferring such a convex shape on the tamped granular material may facilitate release of the tamped granular material, e.g. intact, from the vessel. This may facilitate disposal of the tamped granular material after it has been used to prepare a beverage.

In other words, the surface of the kitchen tamper head may comprise, e.g. be in the form of, a concave surface.

In some embodiments, the central region of the surface being recessed relative to the peripheral region of the surface is defined by the surface having a bowl shape. Such a bowl shape may provide the tamped granular material with a visually appealing shape, as well as facilitating release of the tamped granular material, e.g. intact, from the vessel.

In some embodiments, the surface comprises a concave surface that curves between an edge of the surface and the central region. In other embodiments, the surface may curve from the peripheral region at a position inboard from the edge of the surface.

In some embodiments, a distance between an uppermost point of the central region to a lowermost point of the peripheral region is at least 1 mm, preferably at least 1.5 mm. Alternatively or additionally, the distance between the uppermost point of the central region to the lowermost point of the peripheral region is at most 3.5 mm, preferably at most 3 mm.

These distances may balance extraction requirements with facilitating formation of tamped granular material that is easily releasable, e.g. releasable intact, as well as being visually appealing.

According to another aspect there is provided a kitchen tamper assembly comprising: the kitchen tamper head according to any of the embodiments described herein; and one or both of: a vessel for receiving the granular material, the kitchen tamper head being dimensioned to fit into the vessel so that the granular material is compressible between the vessel and the kitchen tamper head; and a pressure control system for enabling a controlled pressure to be exerted by the surface on the granular material during tamping.

The vessel may include a cavity in which the granular material is receivable. The cavity of the vessel may be delimited by a wall that extends around the cavity.

In at least some embodiments, the vessel includes a filter-supporting portion for supporting a filter, for example a filter comprising a perforate base on which the granular material is supportable when received in the cavity.

Such a filter may retain the granular material, e.g. ground coffee, but allow the beverage, e.g. brewed coffee, to pass therethrough.

The vessel may be a portable component that is manipulable by a user separately from the kitchen tamper assembly. To this end, the vessel may have a handle for assisting the user to manipulate the vessel, for example to move the vessel towards and away from the kitchen tamper assembly.

It is noted that the vessel being a portable component and including the filter-supporting portion may cause the vessel to be regarded as a so-called portafilter.

In more general terms, the kitchen tamper assembly may include a portafilter for brewing coffee, with the vessel being included in the portafilter.

Movement of the kitchen tamper head in order to implement the tamping may be achieved in any suitable manner, for example by movement of the kitchen tamper head being hydraulically controlled, pneumatically controlled and/or motorized.

Thus, in some embodiments, the kitchen tamper assembly, e.g. the pressure control system thereof, comprises one or more of a motorized system, a hydraulic system, and a pneumatic system for driving the surface of the kitchen tamper head onto the granular material during tamping.

In some embodiments, the kitchen tamper assembly comprises a dispenser for dispensing the granular material into the vessel.

In such embodiments, the dispenser may comprise a grinding assembly for grinding material to form the granular material.

According to yet another aspect there is provided a beverage machine comprising the kitchen tamper head according to any of the embodiments described herein or the kitchen tamper assembly according to any of the embodiments described herein, wherein a liquid dispenser is included in the beverage machine for delivering liquid, e.g. heated water to the tamped granular material.

In some embodiments, the beverage machine comprises, e.g. is in the form of, a coffee machine, e.g. a semi-automatic coffee machine.

In some embodiments, the beverage machine is configurable to switch between a granular material dispensing configuration in which the dispenser and the vessel are arranged to enable the granular material to be dispensed by the dispenser into the vessel, and a tamping and brewing configuration in which the kitchen tamper head, the liquid dispenser and the vessel are arranged to enable the granular material in the vessel to be tamped, and the liquid to be delivered to the tamped granular material in the vessel.

In spite of potential redistribution of the granular material caused by switching from the granular material dispensing configuration to the tamping and brewing configuration, the kitchen tamper head may assist to provide tamped granular material that is easily releasable, e.g. releasable intact, from the vessel, as well as being visually appealing.

According to a further aspect there is provided a method of operating the kitchen tamper head according to any of the embodiments described herein, the method comprising tamping granular material that is suitable for preparing a beverage by pressing the surface of the kitchen tamper head onto the granular material, the granular material being thereby provided with a shape that complements the shape of the surface.

Regarding the granular material, particular mention is made of the granular material comprising, e.g. being, ground coffee, although in principle other types of granular material can be tamped using the kitchen tamper assembly in order to provide a compressed mass of granular material through which a liquid, such as water, can be passed to prepare a beverage.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 shows a kitchen tamper assembly according to an example;
FIG. 2 shows a first example of ground coffee in a vessel prior to tamping;
FIG. 3 shows the ground coffee shown in FIG. 2 after it has been tamped using a conventional kitchen tamper head;
FIG. 4 graphically shows a height variation of the tamped ground coffee shown in FIG. 3;
FIG. 5 shows a kitchen tamper head according to an example;
FIG. 6 shows a second example of ground coffee in a vessel prior to tamping;
FIG. 7 shows the ground coffee shown in FIG. 6 after it has been tamped using a kitchen tamper head according to the present disclosure;
FIG. 8 graphically shows a height variation of the tamped ground coffee shown in FIG. 7; and
FIG. 9 schematically depicts movement of a vessel in the kitchen tamper assembly shown in FIG. 1.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a kitchen tamper head for tamping granular material, which granular material is suitable for preparing a beverage. The kitchen tamper head comprises a surface for contacting the granular material during tamping. A central region of the surface is recessed relative to a peripheral region of the surface, so as to provide the granular material with a shape, e.g. a convex shape, that complements the shape of the surface.

Additionally provided is a kitchen tamper assembly comprising the kitchen tamper head, together with a vessel for receiving the granular material that is to be tamped and/or a pressure control system for enabling a controlled pressure to be exerted by the surface of the kitchen tamper head on the granular material during tamping. Still further provided is a beverage machine comprising the kitchen tamper head or the kitchen tamper assembly. Yet further provided is a method of operating the kitchen tamper head.

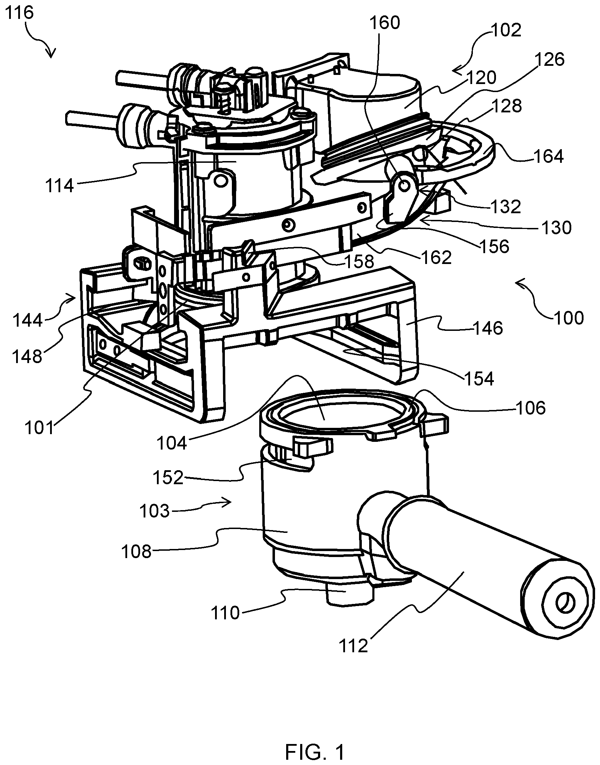

FIG. 1 shows a kitchen tamper assembly 100 according to an example. The kitchen tamper assembly 100 is for, among other things, tamping granular material, which granular material is suitable for preparing a beverage.

Regarding the granular material, particular mention is made of the granular material comprising, e.g. being, ground coffee, although in principle other types of granular material can be tamped using the kitchen tamper assembly in order to provide a compressed mass of granular material through which a liquid, such as water, can be passed to prepare a beverage.

It is generally noted that the term "granular material" as used herein may refer to a particulate material or powder.

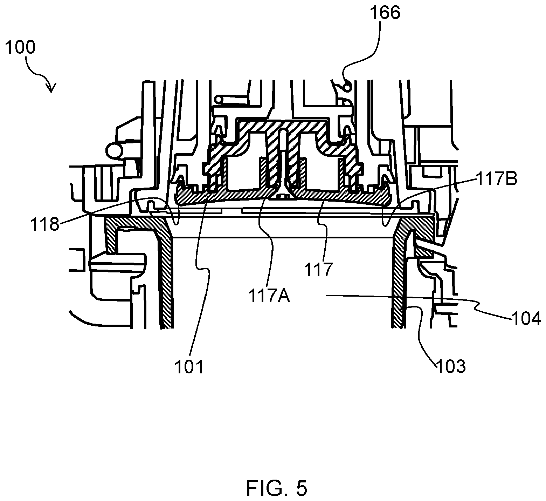

A kitchen tamper head 101 may be included in the kitchen tamper assembly 100. In other embodiments, the kitchen tamper head 101 is a standalone kitchen tamper head 101. Thus, the present disclosure partly relates to the kitchen tamper head 101 per se. The design of the kitchen tamper head 101 will be explained in more detail herein below, with reference to FIG. 5.

The granular material for tamping may be delivered in any suitable manner. In some embodiments, and referring again to FIG. 1, the kitchen tamper assembly 100 includes a dispenser 102 for dispensing the granular material, e.g. ground coffee, into a vessel 103.

The kitchen tamper head 101 may be dimensioned to fit into the vessel 103 so that the granular material is compressible between the vessel 103, in particular a wall 106 of the vessel 103, and the kitchen tamper head 101.

The vessel 103 may include a cavity 104 in which the granular material is receivable. The cavity 104 of the vessel 103 may be delimited by the vessel's 103 wall 106 that extends around the cavity 104.

In at least some embodiments, the vessel 103 includes a filter-supporting portion 108 for supporting a filter, for example a filter comprising a perforate base on which the granular material is supportable when received in the cavity 104.

Such a filter may retain the granular material, e.g. ground coffee, but allow the beverage, e.g. brewed coffee, to pass therethrough.

In some embodiments, such as shown in FIG. 1, the vessel 103 comprises a spout 110 through which brewed coffee is deliverable, e.g. into a cup or pot placed beneath the spout 110. Such a spout 110 may be arranged downstream of the filter.

The vessel 103 may be a portable component that is manipulable by a user separately from the kitchen tamper assembly 100 or separately from a remainder of the kitchen tamper assembly 100 (when the vessel 103 is itself included in the kitchen tamper assembly 100). To this end, the vessel 103 may have a handle 112 for assisting the user to manipulate the vessel 103, for example to move the vessel 103 towards and away from the kitchen tamper assembly 100.

It is noted that the vessel 103 being a portable component and including the filter-supporting portion 108 may cause the vessel 103 to be regarded as a so-called portafilter.

Such a portafilter can be moved by the user to the kitchen tamper assembly 100 in order to receive granular material, e.g. ground coffee, dispensed by the dispenser 102.

A liquid dispenser 114 may deliver liquid, e.g. water that may be heated or not, to the tamped granular material. Such a liquid dispenser 114 may, for example, be included in a beverage machine 116, e.g. a coffee machine, that also includes the kitchen tamper assembly 100 or the kitchen tamper head 101.

In some embodiments, the portafilter may be moved by the user to the liquid dispenser 114 in order to receive liquid dispensed by such a liquid dispenser 114. In such embodiments, the beverage machine 116 in which the liquid dispenser 114 is included may, for example, comprise a semi-automatic coffee machine.

Any suitable type of liquid dispenser 114 can be contemplated provided that the liquid dispenser 114 is capable of dispensing liquid into the vessel 103. In some embodiments, the liquid dispenser 114 comprises a heater and a liquid flow path along which liquid is displaced by a pump through the heater in order for the liquid to be heated and delivered into the vessel 103.

In some embodiments, the liquid dispenser 114 is configured to dispense the liquid into the vessel 103 in response to a liquid pressure, e.g. water pressure, reaching or exceeding a threshold pressure, for example about 4 bar. Such a threshold pressure may, for example, be set according to the type of beverage, e.g. coffee, such as espresso, that is intended to be brewed in the vessel 103.

In such embodiments, one or more valves included in a hydraulic circuit of the liquid dispenser 114 may open in response to the threshold pressure being reached or exceeded.

The vessel 103, e.g. portafilter, may be included in the coffee machine 116 and/or in the kitchen tamper assembly 100. Owing to the possibility of the vessel 103, e.g. portafilter, being a portable component that is manipulable separately from other components of the beverage machine 116, it is also contemplated that the beverage machine 116 is provided to the user without the vessel 103. In this case, the vessel 103 may be already in the possession of the user, and/or acquirable by the user separately from the beverage machine 116.

It is noted, for the avoidance of any doubt, that the term "tamping" refers to compressing, typically by downwardly pressing onto, the granular material, for example the granular material received in the vessel 103, e.g. portafilter.

A denser mass of granular material, e.g. coffee grounds, results from the tamping that provides more resistance to liquid flow therethrough than that provided by the granular material prior to tamping.

In some embodiments, the kitchen tamper head 101 is included, together with the vessel 103, e.g. portafilter, in the kitchen tamper assembly 100.

Alternatively or additionally, the kitchen tamper assembly 100 comprises a pressure control system for enabling a controlled pressure to be exerted by a surface of the kitchen tamper head 101 on the granular material during tamping.

Movement of the kitchen tamper head 101 in order to implement the tamping may be achieved in any suitable manner, for example by movement of the kitchen tamper head 101 being hydraulically controlled, pneumatically controlled and/or motorized.

Thus, in some embodiments, the kitchen tamper assembly 100 comprises one or more of a motorized system, a hydraulic system (as shown in FIG. 1) and a pneumatic system for driving the surface of the kitchen tamper head 101 onto the granular material during tamping.

In some embodiments, such as shown in FIG. 1, the kitchen tamper head 101 is included in the liquid dispenser 114. In such embodiments, the kitchen tamper head 101, as well as tamping the coffee, may close the cavity 104 of the vessel 103 to define a brewing chamber to which the liquid is deliverable, e.g. via one or more openings defined in the kitchen tamper head 101.

Alternatively or additionally, the liquid dispenser's 114 hydraulic circuit may be configured to control movement, e.g. lowering, of the kitchen tamper head 101 towards the granular material received in the vessel 103.

In such embodiments, when the pressure inside the brewing chamber and in the hydraulic circuit reaches or exceeds the threshold pressure, for example about 4 bar, the liquid, e.g. water, may be delivered into the brewing chamber. It is reiterated that such pressure-responsive water delivery may be implemented by, for example, opening of valve(s) in the hydraulic circuit.

It is noted that in embodiments in which the liquid dispenser's 114 hydraulic circuit is configured to control movement of the kitchen tamper head 101, the liquid, e.g. water, employed for this purpose may not be guided through the liquid dispenser's 114 heater (in contrast to the liquid, e.g. water, used for brewing the beverage).

More generally, it is noted that homogeneity of the tamped granular material may be a relevant requirement. If the tamped granular material is inhomogeneous, it may not be pressed dry and may fall apart during disposal, and leave more residue behind in the vessel 103, e.g. in the brewing chamber.

The user may accordingly prefer an intact, relatively dry tamped granular material, e.g. coffee puck, that leaves less mess during the process of disposal. The user may also prefer the visual appearance of such an intact dry tamped granular material, since this may assist to convey the impression that the brewing process and/or the beverage machine 116 is/are of high quality.

In order to attain such an intact dry tamped granular material, post-treatment of the tamped granular material may not be feasible. Moreover, adjustment of particle size of the granular material may not be viable because of the particle size being primarily determined by taste requirements.

Forming the tamped granular material can be regarded as involving at least two main sub-processes: (i) delivering the granular material into the vessel 103, e.g. portafilter; and (ii) tamping, in other words compacting, the granular material by pressing the surface of the kitchen tamper head 101 onto the granular material. Sub-process (ii) may, for example, be implemented by lowering the kitchen tamper head 101 onto the granular material, as previously mentioned.

Sub-process (i) may mainly involve positioning of components of the kitchen tamper assembly 100 with respect to each other. Desirably, the granular material is delivered, e.g. via the dispenser 102, in such a way that the granular material is symmetrically distributed, e.g. rotationally symmetrically, distributed in the vessel 103. This is because the compaction of the granular material may offer only limited compensation for an asymmetric distribution of the granular material, and hence a density gradient may result in the case of the compacted/tamped granular material that is asymmetrically distributed in the vessel 103.

What can also play a role in the density properties of the compacted granular material is accelerations that may occur during movement of the vessel 103 containing the granular material that is to be tamped. In some embodiments, which are explained in more detail herein below, accelerations occur during movement of the vessel 103 between a granular material dispensing configuration, e.g. comprising a defined position of the vessel 103, in which the dispenser 102 and the vessel 103 are arranged to enable the granular material to be dispensed by the dispenser 102 into the vessel 103, and a tamping and brewing configuration, e.g. comprising a brew position of the vessel 103, in which the kitchen tamper head 100, the liquid dispenser 114 and the vessel 103 are arranged to enable the granular material in the vessel 103 to be tamped, and the liquid to be delivered to the tamped granular material in the vessel 103. If these accelerations are high enough, for example during hitting an end stop defining the brew position of the vessel 103, the granular material may be caused to move and change its distribution.

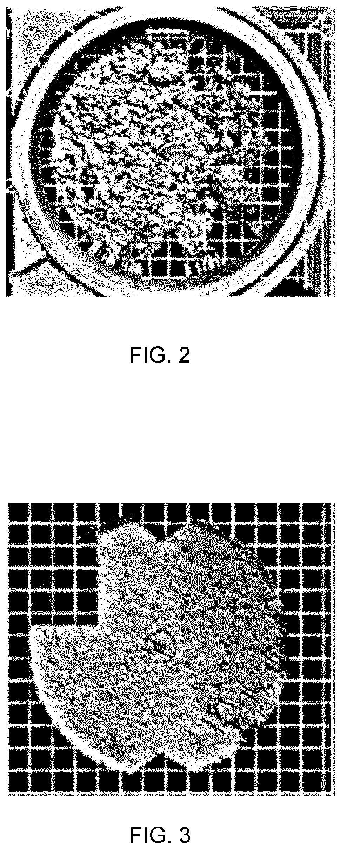

FIG. 2 shows an example of how the granular material, in this case ground coffee, can be distributed just prior to tamping/compaction. FIG. 3 shows the granular material just after compaction. The granular material appeared to be concentrated towards the lower left portion of the view provided in FIG. 3, with the highest point of the tamped granular material being just to the right of the bottom portion of the view provided in FIG. 3. In this non-limiting illustrative example, the lowest point of the tamped granular material aligned with an opening defined in the kitchen tamper head 101 for admitting liquid into the brew chamber.

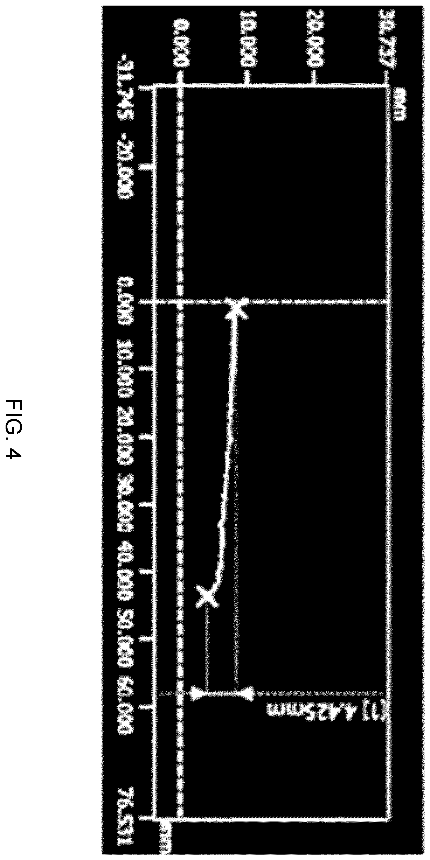

The tamped plane inclined by 2 to 4 mm, with the granular material at the lower point being hardly compressed. As graphically represented in FIG. 4, a difference between the highest and lowest points of the tamped granular material can be up to about 4 mm (the precise measurement shown in FIG. 4 is 4.425 mm). As a consequence, particles in the lowest areas may not be confined in their position, and may flow around. Following contact with liquid, such areas can remain wet. In extreme cases, this will also affect the brewing yield and thus directly affect the quality of the beverage, e.g. coffee. At the very least, the non-uniform tamped granular material may be visually unappealing, and thus convey to the user an impression of low quality.

For these reasons, and referring now to FIG. 5, the surface 117 of the kitchen tamper head 101 that contacts the granular material during tamping has a central region 117A that is recessed relative to a peripheral region 117B of the surface 117, which peripheral region 117B may extend at least partly, e.g. entirely, around the central region 117A. The central region 117A being recessed relative to the peripheral region 117B may provide the granular material with a shape, e.g. a convex shape, that protrudes in a central portion of the tamped granular material relative to a peripheral portion of the tamped granular material.

This shape of the tamped granular material may thus complement the shape of the surface 117.

It has been found that this shape of the tamped granular material may assist subsequent release of the tamped granular material from the vessel 103 in which the granular material is tamped. This may facilitate disposal of the tamped granular material after it has been used to prepare a beverage.

The shape, e.g. convex or domed shape, of the tamped granular material may also mean that it has an enhanced visual appearance, before and during disposal. This may assist the kitchen tamper head 101, or the kitchen tamper assembly 100 or beverage machine 116 in which the kitchen tamper head 101 is included, to be favorably perceived by the user as being of good quality.

The enhanced/clean release of the tamped granular material, as well as its enhanced visual appearance, may be particularly desirable in the case of a semi-automatic coffee machine 116, e.g. having the design shown in FIG. 1, since disposal of the coffee puck is implemented by the user, and the user tends to see the coffee puck before disposing of it.

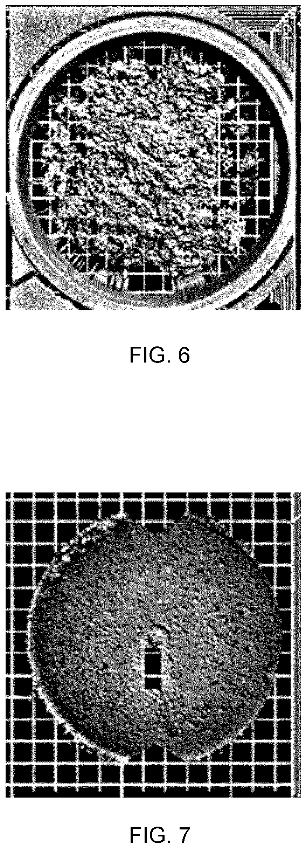

For illustration, a small "mountain" of granular material, in this case ground coffee, is shown in FIG. 6. The angle of the top of this "mountain" is known as the angle of repose. Pressing this "mountain" flat may thus require that the center is compressed more than at the periphery/sides.

The present disclosure provides, at least in part, a shift away from the idea of compressing the granular material more in the center, e.g. by making the tamper head convex, but rather accepting that the tamped granular material will be convex, and providing the surface 117 with the central region 117A that is recessed relative to the peripheral region 117B, e.g. so that the surface 117 is concave.

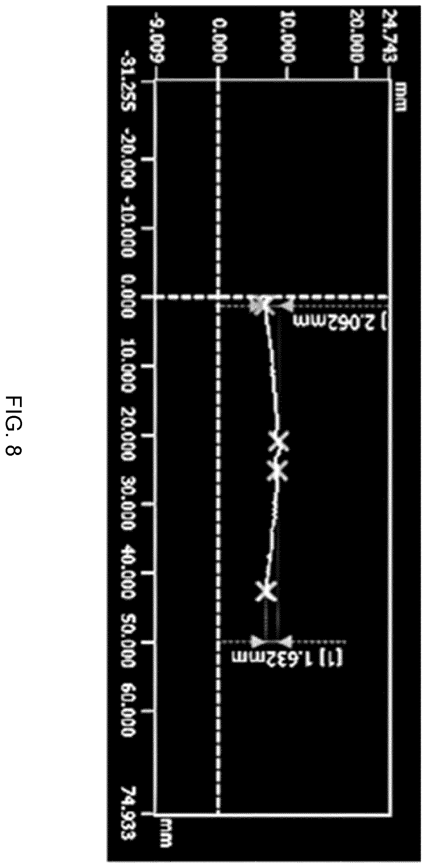

Following this route, the tamped granular material was found to be clearly more homogeneous, and suffered from less visual imperfections like skewness, local wetness and pits. In this regard, FIG. 7 shows the granular material shown in FIG. 6 following tamping using the kitchen tamper head 101 of the non-limiting example depicted in FIG. 5. The tamped granular material shown in FIG. 7 is evidently nicely centered, with the highest point tamped at the center. Referring to FIG. 8, it can be seen that the highest point of the tamped granular material is about 2 mm above the edges (the precise measurements shown in FIG. 8 are 1.632 mm and 2.062 mm).

In some embodiments, such as shown in FIG. 5, the surface 117 curves between the peripheral region 117B and the central region 117A. This may give the surface of the tamped granular material a convex shape, for example a domed shape.

As well as enhancing the visual appearance of the tamped granular material, conferring such a convex shape on the tamped granular material may facilitate release of the tamped granular material, e.g. intact, from the vessel 103. This may facilitate disposal of the tamped granular material after it has been used to prepare a beverage.

The surface 117 of the kitchen tamper head 101 can be regarded as comprising, e.g. being, a concave surface. In some embodiments, such as shown in FIG. 5, the central region 117A of the surface 117 being recessed relative to the peripheral region 117B of the surface 117 is defined by the surface 117 having a bowl shape. Such a bowl shape may provide the tamped granular material with a visually appealing shape, as well as facilitating release of the tamped granular material, e.g. intact, from the vessel 103.

In some embodiments, such as shown in FIG. 5, the surface 117 curves between an edge 118 of the surface 117 and the central region 117A. Thus, the entirety of the surface 117 may be concave.

In other embodiments, the surface 117 may curve from the peripheral region 117B at a position inboard from the edge 118 of the surface 117.

In some embodiments, a distance between an uppermost point of the central region 117A to a lowermost point of the peripheral region 117B is at least 1 mm, preferably at least 1.5 mm. Alternatively or additionally, the distance between the uppermost point of the central region 117A to the lowermost point of the peripheral region 117B is at most 3.5 mm, preferably at most 3 mm.

These distances may balance extraction requirements with facilitating formation of tamped granular material that is easily releasable, e.g. releasable intact, as well as being visually appealing.

In some embodiments, and referring again to FIG. 1, the dispenser 102 comprises a container 120 having an outlet through which the granular material, e.g. ground coffee, is deliverable from the container 120.

The container 120 may comprise, e.g. be in the form of, a chute through which the granular material is deliverable, e.g. at least partly by gravity.

Such a chute may terminate at a chute opening that defines the outlet through which the granular material is deliverable from the chute into the vessel 103.

In at least some embodiments, the kitchen tamper assembly 100 and/or the beverage machine 116 comprises a grinding assembly for grinding material, e.g. coffee beans, to form the granular material, e.g. ground coffee.

The grinding assembly may thus provide the granular material that is deliverable from the container 120, e.g. chute. In such embodiments, the container 120 may extend beneath the grinding assembly to enable the granular material provided by the grinding assembly to be moved away therefrom at least partly by gravity.

It is noted at this point, in relation to the above-mentioned sub-process (i) that aligning positions of components, such as the grinding assembly and the vessel 103, in such a way that the granular material is delivered into the center of the vessel 103 may be non-trivial. For example, a relatively long and narrow chute capable of targeted delivery of the granular material may not be feasible in a kitchen tamper assembly 100 or beverage machine 116 in which space is limited. Moreover, a narrow chute may risk clogging issues, particularly when the granular material, e.g. ground coffee, is relatively greasy and/or prone to agglomerate. Furthermore, the speed at which the granular material leaves the chute may mean that the granular material is not ultimately delivered to the intended location, particularly in the case of non-greasy, loose powders.

After dispensing the granular material, movement of the vessel 103, e.g. portafilter, may represent a further complicating factor affecting the distribution of the granular material in the vessel 103. The accelerations may not be easy to predict. Friction may also change over time, pollution may accumulate on rail(s) (see below) on which the vessel 103 may be moveable, damping means (see below) may be temperature dependent and may also changes over time.

For these reasons, the shape of the surface 117 of the kitchen tamper head 101 may represent a significant improvement, since the kitchen tamper head 101 may create tamped granular material having the above-described characteristics irrespective of the initial distribution, e.g. "mountain", of granular material, whether or not the granular material is initially shifted to a side of the vessel 103. In other words, the shape of the surface 117 of the kitchen tamper head 101 may correct for uneven initial distribution of the granular material.

Optimizing dispensing of the granular material into the vessel 103 is nonetheless desirable. In some embodiments, and referring again to FIG. 1, the dispenser 102 comprises a shutter 126 movable between an open position that allows the granular material to be delivered via the outlet, and a closed position that blocks delivery of the granular material via the outlet.

The capability of the shutter 126 to block the outlet, e.g. chute opening, when adopting the closed position may assist to minimize or prevent unintentional egress of residual granular material from the container 120 and concomitant pollution of surroundings by the granular material.

Any residual granular material collected on the shutter 126 when the shutter 126 is in the closed position may be delivered into the vessel 103 when the shutter 126 subsequently adopts the open position.

It is noted that the shutter 126 may serve an additional purpose in embodiments in which the dispenser 102 is included in a beverage machine 116 together with the liquid dispenser 114, or at least when such a liquid dispenser 114 is being operated proximal to the dispenser 102. In this respect, the shutter 126 may assist to restrict ingress of steam into the container 120, e.g. towards the above-described grinding assembly. By limiting passage of moisture into the container 120 in this manner, reliability of granular material delivery may be enhanced.

To this end, the dispenser 102 may include a sealing member, e.g. a gasket made from an elastomeric material, e.g. silicone rubber, arranged to provide a seal between the shutter 126 and the container 120 when the shutter 126 is in the closed position.

In at least some embodiments, and still referring to FIG. 1, the dispenser 102 comprises a biasing element 128 arranged to bias the shutter 126 into the closed position.

Thus, the default position adopted by the shutter 126 may be the closed position. In this way, unintentional egress of residual granular material from the container 120 and, for example, steam ingress into the container 120 may be minimized or prevented when the dispenser 102 is not being employed to dispense ground coffee into the vessel 103.

Any suitable type of biasing element 128 can be contemplated for biasing the shutter 126 into the closed position. In some embodiments, such as shown in FIG. 1, the biasing element 128 comprises, e.g. is in the form of, a spring.

The spring used as the biasing element 128 can be of any suitable type. In some embodiments, the spring is a torsion spring. Such a torsion spring may be particularly suitable in embodiments, such as shown in FIG. 1, in which the shutter 126 is pivotable between the open position and the closed position.

In some embodiments, such as shown in FIG. 1, the dispenser 102 comprises a position determination element 130 arranged to be triggered by the outlet of the container 120 and the vessel 103 adopting a defined position relative to each other, and a shutter mover 132 arranged to cause movement of the shutter 126 from the closed position to the open position in response to the position determination element 130 being triggered. The defined position of the outlet and the vessel 103 relative to each other, and the shutter 126 being in the open position may permit delivery of the granular material into the vessel 103.

Thus, the delivery of ground coffee via the outlet may be implemented according to a defined, e.g. pre-set, spatial relationship between the outlet and the vessel 103.

This may assist in attaining the desired delivery of the granular material into the vessel 103, and thus the desired distribution of the granular material in the vessel 103.

Moreover, pollution of surroundings of the dispenser 102 by granular material may be alleviated due to the movement of the shutter 126 from the closed position to the open position being contingent on adoption of the defined position of the outlet and the vessel 103 relative to each other.

In some embodiments, the defined position comprises alignment of the wall 106 that extends around the cavity 104 with a (further) wall of the container 120 that delimits the outlet so that the wall 106 and the further wall guide the ground coffee delivered from the container 120 into the cavity 104.

This alignment between the wall 106 and the further wall may assist to minimize or prevent pollution of the kitchen tamper assembly 100, a coffee machine 116 in which the kitchen tamper assembly 100 may be included, and/or an area surrounding the kitchen tamper assembly 100 by granular material.

In some embodiments, arrangement of the vessel 103 relative to the liquid dispenser 114 and relative to the dispenser 102 is configurable to enable switching between the granular material dispensing configuration in which the dispenser 102 and the vessel 103 are arranged to enable the granular material to be dispensed by the dispenser 102 into the vessel 103, and the tamping and brewing configuration in which the kitchen tamper head 101, the liquid dispenser 114 and the vessel 103 are arranged to enable the granular material in the vessel 103 to be tamped, and the liquid to be delivered to the tamped granular material in the vessel 103.

In the tamping and brewing configuration, a liquid outlet of the liquid dispenser 114 and the vessel 103 are positioned relative to each other, e.g. in the "brew position", so that liquid is deliverable into the vessel 103.

In the granular material dispensing configuration, the vessel 103 and the outlet of the container 120 adopt the defined position, which can be regarded as a "fill position" because the granular material, e.g. ground coffee, is able to the fill the vessel 103.

The shutter 126 may be fully open when the vessel 103, e.g. portafilter, is in the fill position (or "grind position" in embodiments in which the grinding assembly is included in the dispenser 102), and fully closed as soon as the vessel 103 is out of, in other words displaced from, the fill position.

In some embodiments, the tamping and brewing configuration comprises alignment of a central water delivery axis of the liquid dispenser 114 that extends through a center of the liquid outlet or kitchen tamper head 101 and a central axis of the vessel 103 which passes through a center of the cavity 104.

In this tamping and brewing configuration, or in any other arrangement in which the vessel 103 is spatially removed from the defined position, the shutter 126 may remain closed, for example due to the biasing element 128 biasing the shutter 126 into the closed position.

In at least some embodiments, relative movement of the vessel 103 and the outlet so that the defined position is no longer adopted, for example by moving the vessel 103 away from the outlet following delivery of the ground coffee into the vessel 103, causes the shutter 126 to adopt the closed position. The latter can, for example, be implemented via the above-described biasing element 128.

The nature of the relative movement of the vessel 103 and the outlet in order to reach the defined position is not particularly limited. In some embodiments, the vessel 103 is displaced, e.g. displaced in a horizontal plane, towards the outlet while the outlet's position remains fixed. However, alternative possibilities can be contemplated provided that the position determination element 130 can be appropriately configured to determine adoption of the defined position of the vessel 103 and outlet relative to each other.

In some embodiments, the vessel 103, e.g. portafilter, may rotate, e.g. about its central axis, in order to reach the defined position.

Alternatively or additionally, the vessel 103, e.g. portafilter, may be displaced upwardly or downwardly, e.g. while the outlet's elevation remains fixed, in order to reach the defined position.

In other embodiments, the vessel 103 may not itself be required to move in order for the defined position to be adopted. For example, the vessel's 102 position may be fixed, e.g. by the vessel 103 being statically mountable in the coffee machine 116, and the container 120 may be movable to bring the outlet to the defined position.

Such movement of the container 120 can be implemented in any suitable manner. In some embodiments, the container 120, e.g. chute, is pivotably mounted, with pivoting of the container 120, e.g. chute, towards the vessel 103 enabling adoption of the defined position.

In such embodiments, movement, e.g. pivoting, of the container 120 away from the defined position may be for the purpose of, for example, providing space for the kitchen tamper head 101 to approach the mounted vessel 103 in order to implement tamping of the ground coffee received in the vessel 103.

In some embodiments, such as shown in FIG. 1, the kitchen tamper assembly 100 comprises a guiding assembly 144 configured to guide movement of the vessel 103 and the outlet relative to each other in order to bring the vessel 103 and the outlet into the defined position.

Such a guiding assembly 144 may provide a convenient way of facilitating arrangement of the outlet and the vessel 103 in the defined position.

In some embodiments, the guiding assembly 144 is configured to guide movement of the vessel 103 relative to the outlet of the container 120 and relative to the liquid outlet of the liquid dispenser 114 to enable switching between the dispensing configuration in which the dispenser 102 and the vessel 103 are arranged to enable the granular material to be dispensed by the dispenser 102 into the vessel 103, and the tamping and brewing configuration in which the kitchen tamper head 101, the liquid dispenser 114 and the vessel 103 are arranged to enable the granular material in the vessel 103 to be tamped, and the liquid to be delivered to the tamped granular material in the vessel 103.

The guiding assembly 144 can be configured in any suitable manner in order to guide movement of the vessel 103 and the outlet relative to each other.

In some embodiments, the guiding assembly 144 is configured to guide movement of the vessel 103 relative to a fixed position of the outlet.

Alternatively, the guiding assembly 144 may be configured to guide movement of the container 120 relative to a fixed position of the vessel 103 in order to bring the outlet and the vessel 103 into the defined position relative to each other.

In some embodiments, such as shown in FIG. 1, the guiding assembly 144 comprises a carrier 146 for carrying the vessel 103, and a carrier movement assembly for guiding the carrier 146, together with the vessel 103, towards the outlet. In such embodiments, the carrier movement assembly may include runner(s) and/or rail(s) 148 for enabling sliding movement of the carrier 146.

The vessel 103, e.g. portafilter, may be received in the carrier 146 in any suitable manner. In some embodiments, such as shown in FIG. 1, one or more grooves 152 may be defined in the vessel 103, e.g. in an exterior surface of the vessel 103, with the carrier 146 comprising protrusion(s) 154 that engage with the groove(s) 152 when the vessel 103 is received in the carrier 146 in order to secure the vessel 103 to the carrier 146.

It is noted that the groove(s) 152 and the protrusion(s) 154 can be included in a bayonet-type coupling between the vessel 103 and the carrier 146. Numerous alternative ways of receiving and securing the vessel 103 in the carrier 146 can be contemplated, such as protrusion(s) protruding from the external surface of the vessel 103, with such protrusion(s) being receivable in groove(s) defined in the carrier 146, and so on.

In alternative embodiments, the carrier 146 is omitted. For example, the vessel 103 may itself be slidable along runner(s) and/or rail(s) 148 included in the guiding assembly 144.

More generally, any form of movement may be guided by the guiding assembly 144 provided that the vessel 103 and/or the outlet can be guided so as to adopt the defined position. In some embodiments, such as shown in FIG. 1, the movement guided by the guiding assembly 144 comprises translational movement of the vessel 103 and the outlet relative to each other. Such a translational movement may comprise a linear translational movement and/or an arcuate translational movement.

In a non-limiting example, the guiding assembly 144 comprises curved rails 148 that form a circle segment in a horizontal plane, with the center point of the curvature of the rails 148 lying distal with respect to a circumference of the wall 106 of the vessel 103, e.g. portafilter. In such an example, a lateral movement with a (slight) rotation of the carrier 146 between the brew position and the fill position may be evident to the user standing in front of the guiding assembly 144.

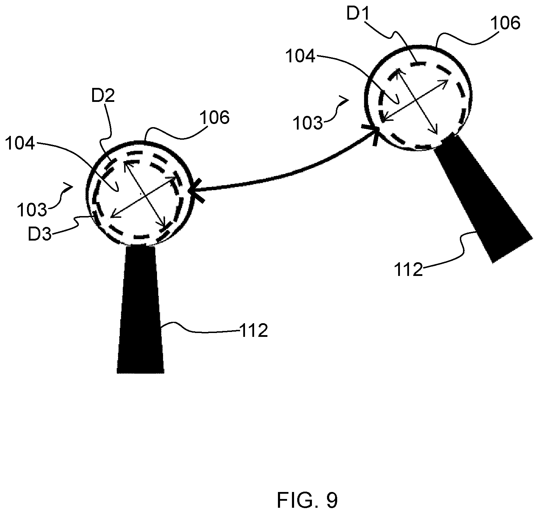

An arcuate translational movement of the vessel 103 is schematically depicted in FIG. 9. The left-hand position in FIG. 9 corresponds to the tamping and brewing configuration, and the right-hand position in FIG. 9 corresponds to the granular material dispensing configuration. The dotted circle D1 is intended to represent the distribution of the granular material in the vessel 103 immediately following dispensing of the granular material into the vessel 103. The dotted circle D2 is intended to represent an ideal distribution of the granular material following adoption of the tamping and brewing configuration and just prior to tamping, whereas the dotted circle D3 denotes an actual distribution of the granular material just prior to tamping.

The distribution D1 may be controlled via, for example, orientation of the dispenser 102, e.g. the grinding assembly and/or chute, relative to the vessel 103.

Control over the distribution D3 may be enhanced by, for example, controlling accelerations during movement of the vessel 103, e.g. using damping means to reduce abruptness of the stop at the end of the vessel's 103 movement that otherwise leads to shifting of the granular material and distribution changes from D1 to D3.

In some embodiments, the kitchen tamper assembly 100 includes a sensing system arranged to detect approach of the vessel 103 and/or the carrier 146 towards the fill position, and a controller configured to activate the grinding assembly to grind the material, e.g. coffee beans, based on the sensor detecting this approach.

In such embodiments, the vessel 103 or the carrier 146 may include a magnet, with the sensing system comprising a Hall sensor for detecting approach of the vessel 103 and/or the carrier 146 towards the fill position via detection of the magnet's magnetic field.

In some embodiments, the controller may be triggered by a signal from the sensing system, e.g. Hall sensor, to activate the grinding assembly to grind the material, e.g. coffee beans, but with a delay for allowing the vessel 103 and/or the carrier 146 to reach the fill position. For example, a 0.5 to 1 second delay may be implemented by the controller.

Turning to the position determination element 130 and the shutter mover 132, these components can have any suitable design provided that the position determination element 130 is triggerable by, in other words in response to, the outlet and the vessel 103 adopting the defined position relative to each other, and the shutter mover 132 is capable of moving the shutter 126 from the closed position to the open position in response to the position determination element 130 being triggered.

In some embodiments, the position determination element 130 comprises a sensor for sensing adoption of the defined position, and a controller adapted to control the shutter mover 132, e.g. an electromechanical shutter actuator, to move the shutter 126 from the closed position to the open position based on data from the sensor being indicative of adoption of the defined position.

In such embodiments, any suitable sensor may be employed for the position determination element 130. For example, an optical sensor arranged to optically sense adoption of the defined position, e.g. by a light beam being interrupted by the vessel 103 and/or the container 120 reaching a position corresponding to the defined position.

In other embodiments, such as shown in FIG. 1, the position determination element 130 and the shutter mover 132 are arranged to mechanically determine adoption of the defined position and move the shutter 126 from the closed position to the open position. Such a mechanically-implemented position determination and shutter 126 actuation may be more cost-effective to implement than, for example, the above-described solution utilizing a sensor- and controller-comprising position determination element 130, and an electromechanical shutter actuator.

In some embodiments, such as shown in FIG. 1, the position determination element 130 comprises a lever member 156. In such embodiments, the shutter mover 132 may be arranged to cause movement of the shutter 126 from the closed position to the open position in response to movement of the lever member 156 caused by adoption of the defined position. This may provide a relatively simple and cost-effective way of implementing the position determination element 130 and the shutter mover 132.

In some embodiments, the guiding assembly 144 comprises a contact portion 158 arranged to bear against an activation point of the lever member 156 when the outlet and the vessel 103 adopt the defined position.

In such embodiments, the contact portion 158 may be included in the carrier 146 and arranged to bear against the lever member 156 when the carrier 146 carrying the vessel 103 reaches a position in which the outlet and the vessel 103 adopt the defined position relative to each other.

In alternative embodiments, the contact portion 158 may be included in the vessel 103 itself. In such embodiments, the vessel-comprising contact portion may bear against the lever member's 156 activation point when the vessel 103 is positioned so that the outlet and the vessel 103 adopt the defined position relative to each other.

In some embodiments, the shutter mover 132 comprises a pivot 160 arranged to enable pivoting of the shutter 126 to open and close the outlet. This may provide a relatively straightforward and reliable way of moving the shutter 126.

A pivot point of the pivot 160 may be selected to ensure that movement of the shutter 126 does not interfere with the vessel 103, e.g. portafilter, nor with the ground coffee "mountain" or "pyramid" dispensed into the vessel 103.

As previously noted, a biasing element 128, e.g. a spring, may be arranged to bias the shutter 126 into the closed position. In such embodiments, the position determination element 130 and the shutter mover 132 may be arranged to enable the bias to be overcome when the outlet and the vessel 103 adopt the defined position.

The biasing element 128, e.g. return spring, may ensure that the shutter 126 is closed if the vessel 103, e.g. portafilter, is not in the fill position.

In some embodiments, such as shown in FIG. 1, the biasing element 128, e.g. spring, is arranged to bias rotation of the shutter 126 about the pivot 160 into the closed position. In such embodiments, the biasing of the shutter 126 into the closed position may be overcome by movement of the lever member 156, e.g. when the contact portion 158 bears against the lever member 156. Such movement of the lever member 156 may cause pivoting of the shutter 126 about the pivot 160, against the bias provided by the biasing element 128, thereby to expose the outlet.

When the shutter 126 is in the open position, the ground coffee is deliverable into the vessel 103, e.g. portafilter, as previously described. In some embodiments, the dispenser 102 includes a lower chute element 162 arranged between the outlet and the vessel 103 when the defined position is adopted.

The lower chute element 162 may assist to guide the granular material into the vessel 103, e.g. portafilter.

As an alternative or in addition to the lower chute element 162, the dispenser 102 may include pollution shielding 164 arranged around the container 120 proximal to the outlet.

The pollution shielding 164 may act as a physical barrier to granular material, to prevent any granular material that has escaped from the outlet but not received in the vessel 103 from being transported too far away from the container 120.

It is generally noted that the vessel 103 may be manually movable by the user, e.g. while being guided by the guiding assembly 144, and/or may be movable by a suitable movement mechanism, e.g. an electric and/or hydraulic movement mechanism, for driving movement of the vessel 103 and/or the container 120/outlet towards each other to adopt the defined position.

In some embodiments, and irrespective of how movement of the vessel 103 is implemented, the dispenser 102 includes a locking mechanism configured to retain the vessel 103 and the outlet at the defined position relative to each other while the ground coffee is being delivered into the vessel 103. This may further assist in minimizing or avoiding of pollution by granular material because the locking mechanism may mitigate the risk of relative movement away from the defined position while the ground coffee is being delivered into the vessel 103.

In some embodiments, the locking mechanism comprises a retractable pin arranged to retain the carrier 146 in a position that enables the vessel 103 carried by the carrier 146 to adopt the defined position relative to the outlet. The pin may be retracted/released in any suitable manner, e.g. hydraulically.

In some embodiments, movement of the vessel 103 and/or the carrier 146 to the fill position, e.g. from the brew position, may cause tensioning of a resilient member, e.g. a spring. Release of the tension in the resilient member may drive the vessel's 102 and/or the carrier's 146 return to the brew position.

The resilient member may return the vessel 103 and/or the carrier 146 to the brew position, when, for example, the locking mechanism releases the vessel 103 and/or the carrier 146, e.g. via retraction of the pin.

The return movement may, for example, be dampened by suitable damping means to prevent ground coffee in the vessel 103 from becoming unevenly distributed or being spilled from the vessel 103 during transit back to the brew position.

The controller may be configured to operate/activate the grinding assembly for a fixed amount of time, e.g. 8 to 10 seconds. Such a fixed amount of time may be empirically determined. Alternatively or additionally, the kitchen tamper assembly 100 may include an additional sensor, for example an optical sensor, e.g. light gate-type sensor, for providing feedback on grinding. In such embodiments, the controller may adjust the amount of time during which the grinding assembly is activated based on the feedback.

In this way, variations associated with the grinding assembly and/or the material, e.g. coffee beans, that can cause inaccurate dosing may be accounted for.

When the grinding assembly is deactivated to stop grinding the material, e.g. coffee beans, the controller may control the locking mechanism to release the vessel 103 and/or the carrier 146, to enable the vessel 103 and/or the carrier 146 to return to the fill position, e.g. by action of the resilient member.

In such embodiments, the controller may control a pump, e.g. the pump included in the hydraulic circuit of the liquid dispenser 114, to pump water from a water reservoir to a hydraulic valve that includes a piston connected to the pin. This may cause retraction of the pin, thus unlocking the vessel 103 and/or the carrier 146 to allowing it or them to return to the brew position by action of the resilient member.

When the vessel 103 and/or the carrier 146 reaches the brew position, this may be detected by a further sensing system, e.g. a (further) Hall sensor. The signal from the further sensing system that indicates return to the brew position may be used by the controller as a basis on which to operate, e.g. continue operation of, the pump.

In such embodiments, this pump operation may cause liquid, e.g. water, from a liquid reservoir to be pumped towards the kitchen tamper head 101. Tamping of the ground coffee in the vessel 103 may then ensue, following by delivery of the liquid, as previously described.

In some embodiments, the controller controls the pump time during which liquid is delivered to the vessel 103 based on information received from a flow meter.

When the desired volume of water, e.g. as indicated using the information received from the flow meter, has been pumped to the brew chamber, the pump may stopped.

The controller may be configured to control an electronic valve to allow water used to move the kitchen tamper head 101 to flow back to the water reservoir. In this way, pressure exerted by the kitchen tamper head 101 on the granular material in the vessel 103 can be released.

In such embodiments, and referring to FIG. 5, retraction of the kitchen tamper head 101 may be assisted by recovery of a resilient element 166, e.g. spring, that is pretensioned by the initial movement of the kitchen tamper head 101 that causes tamping of the granular material received in the vessel 103.

The controller may be configured to implement a time delay, e.g. of about 10 seconds, between stopping liquid delivery to the brew chamber and controlling the electronic valve to allow water used to move the kitchen tamper head 101 to flow back to the water reservoir. As well as allowing time for pressure in the brew chamber to decrease, this time delay may permit water to be released/pressed from the puck of granular material. It is noted that the above-mentioned 10 seconds time delay has been empircally determined.

The vessel 103 may then be emptied in order to start a new brew cycle. In the case of the vessel 103 being a portafilter, such a portafilter may first be removed from the beverage machine 116 and the used granular material therein emptied.

More generally, a method is provided for operating the kitchen tamper head 101 according to any of the embodiments described herein, the method comprising tamping the granular material by pressing the surface 117 of the kitchen tamper head 101 onto the granular material. The granular material is thereby provided with a shape that complements the shape of the surface 117.

In some embodiments, the method comprises dispensing the granular material into a vessel 103 using a dispenser 102 that comprises a container 120 having an outlet, a movable shutter 126, a position determination element 130, and a shutter mover 132.

The method may comprise bringing the vessel 103 and the outlet into a defined position relative to each other in order to trigger the position determination element 130, with triggering of the position determination element 130 causing the shutter mover 132 to move the shutter 126 from a closed position to an open position so that the ground coffee is dispensed into the vessel 103.

It is noted that whilst the kitchen tamper assembly 100 is shown in FIG. 1 as part of a beverage machine 116, e.g. a (hybrid) espresso machine comprising an integrated grinding assembly and a manually operable portafilter as the vessel 103, this is not intended to be limiting. In some embodiments, the kitchen tamper assembly 100 is not included in such a coffee machine 116. For example, the kitchen tamper assembly 100 may be a standalone device.

Such a standalone kitchen tamper assembly 100 may, for example, comprise the grinding assembly. This may mean that the kitchen tamper assembly 100 is implementable as a standalone device for grinding and tamping.

In other embodiments, the kitchen tamper assembly 100 may be included in a fully automatic coffee machine, e.g. espresso machine, in which the vessel 103 is automatically, rather than manually, movable. In such a coffee machine 116, the vessel 103 or the container/chute 120 may, for instance, be automatically movable by an electric and/or hydraulic movement mechanism included in the coffee machine 116.

Such movement mechanism(s) may, for instance, move the vessel 103 from the fill position beneath the outlet to a brew position that is spatially removed from the fill position.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen tamper head (101) for tamping granular material suitable for preparing a beverage, the kitchen tamper head comprising a surface (117) for contacting the granular material during tamping, a central region (117A) of the surface being recessed relative to a peripheral region (117B) of the surface.

2. The kitchen tamper head (101) according to claim 1, wherein the surface (117) comprises a concave surface that curves between the peripheral region (117B) and the central region (117A).

3. The kitchen tamper head (101) according to claim 1 or claim 2, wherein the surface (117) curves between an edge (118) of the surface and the central region (117A).

4. The kitchen tamper head (101) according to any one of claims 1 to 3, wherein the central region (117A) being recessed relative to the peripheral region (117B) is defined by the surface (117) having a bowl shape.

5. The kitchen tamper head (101) according to any one of claims 1 to 4, wherein a distance between an uppermost point of the central region (117 A) to a lowermost point of the peripheral region (117B) is at least 1 mm, preferably at least 1.5 mm.

6. The kitchen tamper head (101) according to any one of claims 1 to 5, wherein a distance between an uppermost point of the central region (117 A) to a lowermost point of the peripheral region (117B) is at most 3.5 mm, preferably at most 3 mm.

7. A kitchen tamper assembly (100) comprising:
the kitchen tamper head (101) according to any one of claims 1 to 6; and one or both of:
a vessel (103) for receiving the granular material, the kitchen tamper head being dimensioned to fit into the vessel so that the granular material is compressible between the vessel and the kitchen tamper head; and
a pressure control system for enabling a controlled pressure to be exerted by the surface (117) on the granular material during tamping.

8. The kitchen tamper assembly (100) according to claim 7, wherein the pressure control system is included in the kitchen tamper assembly and comprises one or more of a motorized system, a hydraulic system, and a pneumatic system for driving the surface (117) onto the granular material during tamping.

9. The kitchen tamper assembly (100) according to claim 7 or claim 8, comprising a portafilter for brewing coffee, the vessel (103) being included in the portafilter.

10. The kitchen tamper assembly (100) according to any one of claims 7 to 9, comprising a dispenser (102) for dispensing the granular material into the vessel.

11. The kitchen tamper assembly (100) according to claim 10, wherein the dispenser (102) comprises a grinding assembly for grinding material to form the granular material.

12. A beverage machine (116) comprising the kitchen tamper head (101) according to any one of claims 1 to 6 or the kitchen tamper assembly (100) according to any one of claims 7 to 11, wherein a liquid dispenser (114) is included in the beverage machine for delivering liquid to the tamped granular material.

13. The beverage machine (116) according to claim 12, comprising the kitchen tamper assembly (100) according to claim 10 or claim 11, wherein the beverage machine is configurable to switch between a dispensing configuration in which the dispenser (102) and the vessel (103) are arranged to enable the granular material to be dispensed by the dispenser into the vessel, and a tamping and brewing configuration in which the kitchen tamper head (101), the liquid dispenser (114) and the vessel are arranged to enable the granular material in the vessel to be tamped, and the liquid to be delivered to the tamped granular material in the vessel.

14. A method of operating the kitchen tamper head (101) according to any one of claims 1 to 6, the method comprising tamping granular material that is suitable for preparing a beverage by pressing the surface (117) of the kitchen tamper head onto the granular material, the granular material being thereby provided with a shape that complements the shape of the surface.

15. The method according to claim 14, wherein the granular material comprises ground coffee.
